# EUROPEAN PATENT APPLICATION

(11) **EP 2 282 056 A1**
(43) Date of publication of application: **09.02.2011**
(21) Application number: 10171684.3
(22) Date of filing: 03.08.2010
(51) Int. Cl.: F03D 9/02, A01K 63/06, A01K 63/04

(54) **Wind-powered energy saving system**

(30) Priority: 06.08.2009 TW 098126492
(71) Applicant: Lin, Hui-Fan, Taichung City T'ai pei (TW)
(72) Inventor: Lin, Hui-Fan, Taichung City T'ai pei (TW)
(74) Representative: Becker Kurig Straus

(57) **Abstract**

A wind-powered energy saving system has a power assembly (10), a temperature adjusting assembly (20) and an increasing assembly (30). The power assembly (10) has a fan device (11) and an air compressor (12). The air compressor (12) is connected to the fan device (11). The temperature adjusting assembly (20) is electrically connected to the power assembly (10) and has a heat-eliminating device (21) and a heating device (22). The heat-eliminating device (21) is connected to the air compressor (12) and has an inlet tube (211) and multiple first tempering panels (212). The heating device (22) is connected to the heat-eliminating device (21) and has a linking tube (221) and multiple second tempering panels (222). The increasing assembly (30) is connected to the temperature adjusting assembly (20) and has an air-feeding pipe (31), an exiting device 32 and a spraying device (33).

## Description

### 1. Field of the Invention

The present invention relates to a wind-powered energy saving system, and more particularly to a wind-powered energy saving system that can adjust the temperature of an indoor of a building or a fishpond and supply air to the fishpond.

### 2. Description of Related Art

With the energy deficiency and the environmental consciousness rising, how to use the nature power, such as the solar energy, the hydraulic power or the wind power to generate electric power has became more and more important. Although the solar energy can be transformed into the electric power by the photo-electricity panels, the cost of the photo-electricity panels is expensive and is not affordable for persons of families. The hydraulic power also can be used to generate the electric power, but the use of the hydraulic power is limited due to the location of the hydraulic power system and the size of the equipment. A conventional wind-powered assembly can be used to generate the electric power by rotating a windmill (horizontal type or upright type) and needs a constant voltage regulator to regulate the electricity power, this will increase the cost of using the conventional wind-powered assembly. In addition, the electric power that generated by the conventional wind-powered assembly may be lost during the generating and the transporting processes and this will decrease the generating efficiency of the conventional wind-powered assembly.

Furthermore, Taiwan is sea-girt and has multiple rivers, the aquatic products are the high-class food for the islanders and the artificial aquiculture has been developed in a long history. The culturing area of the artificial aquiculture in Taiwan is about 80,000 hectare, water in the fishpond is standing water and needs to use electric water pumps to supply oxygen to fishes, shrimps or clam s to avoid the oxygen deficit, the fungi propagation and the algae dense growth from occurring. Therefore, the power bill for the electric water pumps used in fishponds is huge and this will increase the cost of culturing and decrease the income of the culturist. Further, the culturist cannot obtain a good harvest in a cold current or natural and man-made calamities. Although, an enclosed type refrigerant compressor can be used to adjust the temperature of water in the fishpond, the heat exchange sheet metals of the enclosed type refrigerant compressor are immersed in water of the fishpond and may be broken due to the seawater erosion. Thus, the refrigerant may leaks into water of the fishpond and pollutes the environment.

Additional, water in the fishpond easy becomes dirty and the culturist needs to pump groundwater or seawater to exchange the dirty water in the fishpond and this will increase the cost and cause the stratum sinking. Furthermore, the electric water pumps are driven by 110 to 240 VAC (voltage of alternating current) and the electric power may leakage from the electric wires that immersed in water of the fishpond to harm the personal safety.

The wind-powered energy saving system in accordance with the present invention mitigates or obviates the aforementioned problems.

The main objective of the present invention is to provide a wind-powered energy saving system that can adjust the temperature of an indoor of a building or a fishpond and supply air to the fishpond.

The wind-powered energy saving system in accordance with the present invention has a power assembly, a temperature adjusting assembly and an increasing assembly. The power assembly has a fan device and an air compressor. The fan device has a rotating shaft. The air compressor is connected to the rotating shaft of the fan device. The temperature adjusting assembly is electrically connected to the power assembly and has a heat-eliminating device and a heating device. The heat-eliminating device is connected to the air compressor and has an inlet tube and multiple first tempering panels. The heating device is connected to the heat-eliminating device and has a linking tube and multiple second tempering panels. The increasing assembly is connected to the temperature adjusting assembly and has an air-feeding pipe, an exiting device and a spraying device. The exiting device is connected to the air-feeding pipe and has an air turbine. The spraying device is coaxially connected to the exiting device and has a water-pumping turbine and a spraying pipe.

Other objectives, advantages and novel features of the invention will become more apparent from the following detailed description when taken in conjunction with the accompanying drawings.

### IN THE DRAWINGS:

Fig. 1 is a schematic diagram of a wind-powered energy saving system in accordance with the present invention mounted in a fishpond;
Fig. 2 is a schematic diagram of a power assembly and a temperature adjusting assembly of the wind-powered energy saving system in Fig. 1;
Fig. 3 is a perspective view of an upright type fan device of the wind-powered energy saving system in accordance with the present invention;
Fig. 4 is a perspective view of a horizontal type fan device of the wind-powered energy saving system in accordance with the present invention;
Fig. 5 is an operational side view in partial section of a vane type windmill of the wind-powered energy saving system in accordance with the present invention;
Fig. 6A is an operational side view in partial section of a centrifugal type windmill of the wind-powered energy saving system in accordance with the present invention;
Fig. 6B is an end view in partial section of the centrifugal type windmill in Fig. 6A;
Fig. 7 is an operational side view in partial section of a modified type windmill of the wind-powered energy saving system in accordance with the present invention;
Fig. 8 is a cross sectional side view of a Roots blower of the wind-powered energy saving system in accordance with the present invention;
Fig. 9 is a schematic diagram of the wind-powered energy saving system in Fig. 1 mounted in an indoor of a building or a fishpond;
Fig. 10 is another schematic diagram of the wind-powered energy saving system in Fig. 1 mounted in an indoor of a building or a fishpond; and
Fig. 11 is an enlarged operational side view of an increasing assembly of the wind-powered energy saving system in Fig. 1.

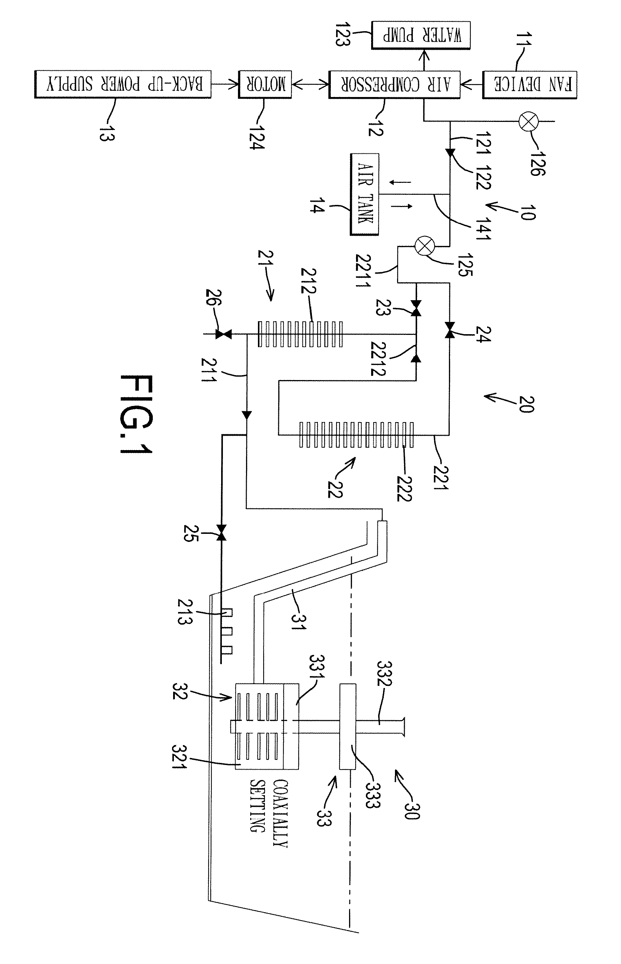

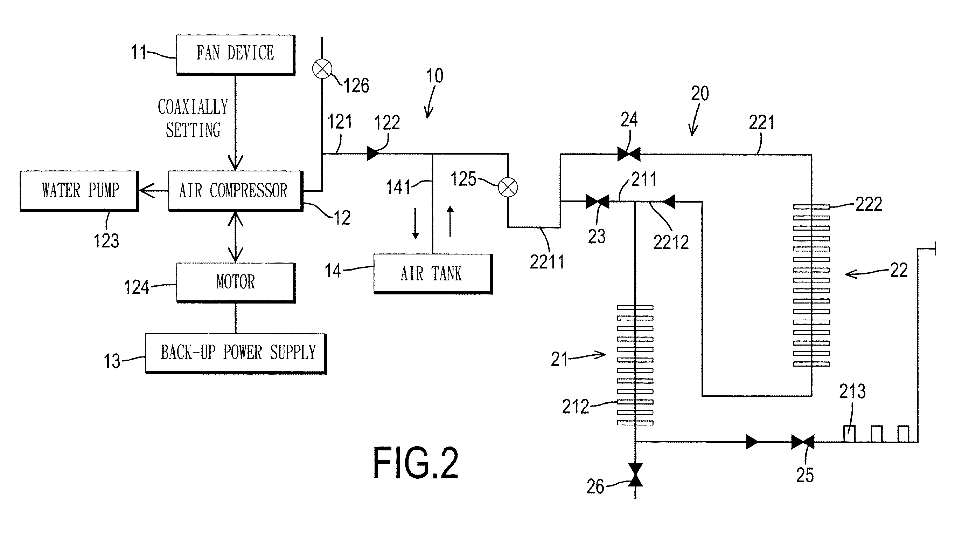

With reference to Figs. 1 and 2, a wind-powered energy saving system in accordance with the present invention comprises a power assembly 10, a temperature adjusting assembly 20 and an increasing assembly 30.

The power assembly 10 has a fan device 11, an air compressor 12, a back-up power supply 13 and an air tank 14.

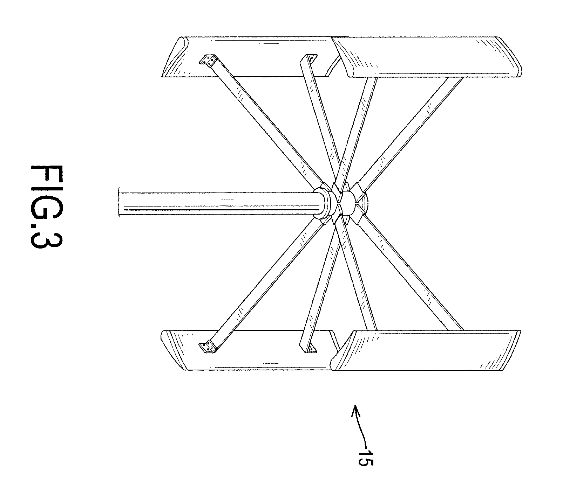

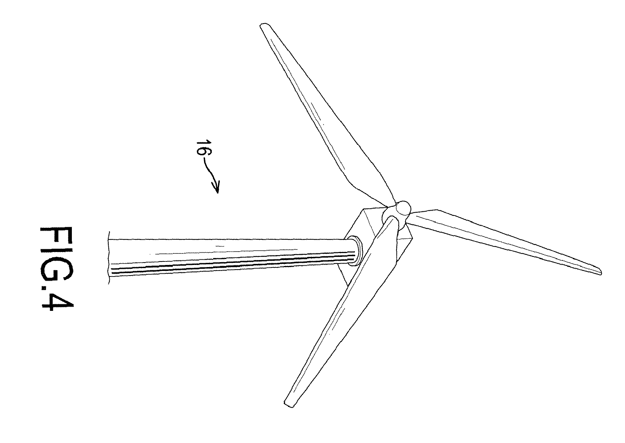

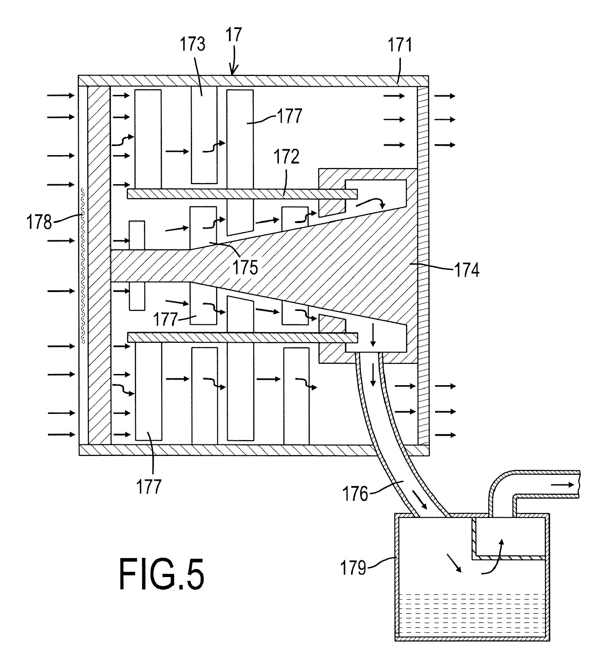

The fan device 11 has a rotating shaft and a tachometer. The tachometer is mounted around the rotating shaft of the fan device 11 to monitor and record the rotating speed of the fan device 11. Preferably, the fan device 11 may be an upright type fan device 15 as shown in Fig. 3, a horizontal type fan device 16 as shown in Fig. 4 or a jet-type fan device as shown in Figs.5, 6A, 6B and 7. With reference to Figs. 5, 6A, 6B and 7, the jet-type fan device has a similar structure as a jet engine of a plane and may be a vane type windmill 17, a centrifugal type windmill 18 or a modified type windmill 40.

With further reference to Fig. 5, the vane type windmill 17 has an outer casing 171 and a rotating tube 172. The outer casing 171 is hollow and has an internal surface, a front side, a rear side, multiple first stator plates 173, a holding mount 174, an air channel 176, a filtrating net 178 and an impurity tank 179. The first stator plates 173 are mounted on the internal surface of the outer casing 171 at intervals between the sides of the outer casing 171. The holding mount 174 is securely mounted on the rear side of the outer casing 171 and has an outer surface and multiple second stator plates 175. The second stator plates 175 are mounted on the outer surface of the holding mount 174 at intervals.

The air channel 176 is connected to the holding mount 174, communicates with the outer casing 171 and has an end extending out of the outer casing 171. The filtrating net 178 is mounted on the front side of the outer casing 171 to prevent the leaves or the impurities from following into the outer casing 171. The impurity tank 179 is connected to the end of the air channel 176 that extends out of the outer casing 171 to store the small size impurities. The rotating tube 172 is hollow, is rotatably mounted around the second stator plates 175 on the holding mount 174 and has an internal surface, an external surface and multiple active plates 177. The active plates 177 are mounted on the surfaces of the rotating tube 172 at intervals and are respectively spaced with the stator plates 173, 175 of the outer casing 171.

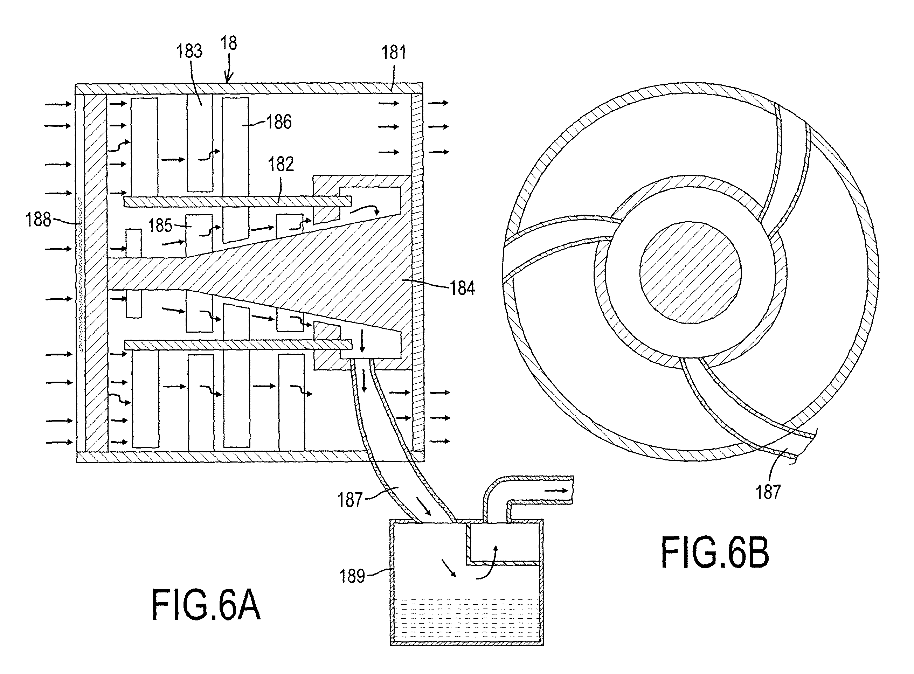

With further reference to Figs. 6A and 6B, the centrifugal type windmill 18 has an outer casing 181 and a rotating tube 182. The outer casing 181 is hollow and has an internal surface, a front side, a rear side, multiple first stator plates 183, a holding mount 184, at least one spiral air channel 187, a filtrating net 188 and an impurity tank 189. The first stator plates 183 are mounted on the internal surface of the outer casing 181 at intervals between the sides of the outer casing 181. The holding mount 184 is securely mounted on the rear side of the outer casing 181 and has an outer surface and multiple second stator plates 185. The second stator plates 185 are mounted on the outer surface of the holding mount 184 at intervals.

The at least one spiral air channel 187 is connected to the holding mount 184, communicates with the outer casing 181 and has an end extending out of the outer casing 181. The filtrating net 188 is mounted on the front side of the outer casing 181 to prevent the leaves or the impurities from following into the outer casing 181. The impurity tank 189 is connected to the end of the at least one spiral air channel 187 that extends out of the outer casing 181 to store the small size impurities. The rotating tube 182 is hollow, is rotatably mounted around the second stator plates 185 on the holding mount 184 and has an internal surface, an external surface and multiple active plates 186. The active plates 186 are mounted on the surfaces of the rotating tube 182 at intervals and are respectively spaced with the stator plates 183, 185 of the outer casing 181.

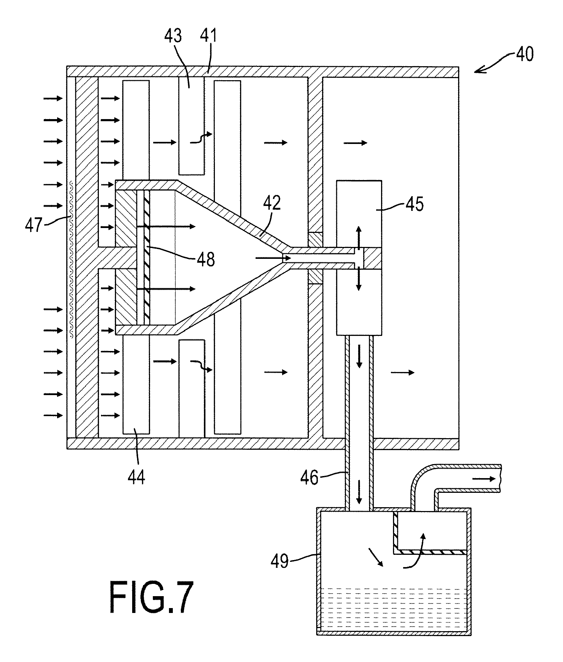

With further reference to Fig. 7, the modified type windmill 40 has an outer casing 41, a rotating tube 42 and an impurity tank 49. The outer casing 41 is hollow and has an internal surface, a front side, a rear side, multiple stator plates 43 and an outer filtrating net 47. The stator plates 43 are mounted on the internal surface of the outer casing 41 at intervals between the sides of the outer casing 41. The outer filtrating net 47 is mounted on the front side of the outer casing 41 to prevent the leaves or the impurities from following into the outer casing 41.

The rotating tube 42 is convergent, is rotatably mounted in the outer casing 41 and has a front end, a rear end, an external surface, multiple active plates 44, a direct blower 45 and an inner filtrating net 48. The front end of the rotating tube 42 is rotatably connected to the front side of the outer casing 41. The active plates 44 are mounted on the external surface of the rotating tube 42 at intervals and are respectively spaced with the stator plates 43 of the outer casing 41. The direct blower 45 is mounted around the rear end of the rotating tube 42 and has an air channel 46. The air channel 46 is connected to the direct blower 45, communicates with the rotating tube 42 and has an end extending out of the outer casing 41. The inner filtrating net 48 is mounted in the front end of the rotating tube 42 to prevent the leaves or the impurities from following into the rotating tube 42. The impurity tank 49 is connected to the end of the air channel 46 that extends out of the outer casing 41 to store the small size impurities. In above embodiments, the rotating tubes 172, 182, 42 are implemented as the rotating shaft of the fan device 11.

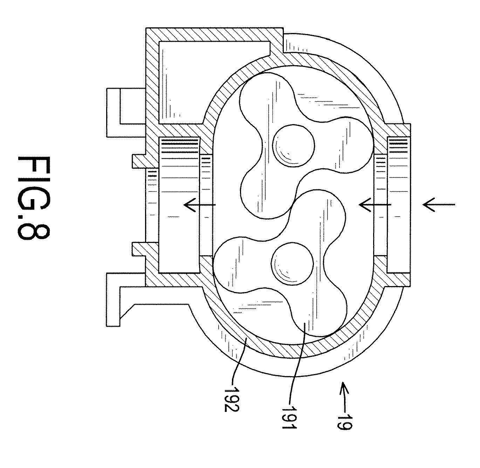

With reference to Figs. 1, 2 and 8, the air compressor 12 may be a Roots blower 19 or an annular blower, is connected to the rotating shaft of the fan device 11 and has an outlet pipe 121, an overpressure valve 126, a constant-pressure valve 125, a check valve 122, a water pump 123 and a motor 124. The Roots blower 19 has a body 192 and two vane wheels 191. The body 192 is hollow and has an inlet and an outlet. The outlet aligns with the inlet of the body 192. The vane wheels 191 are rotatably mounted in the body 192 between the inlet and the outlet of the body 192. The rotating shaft of the fan device 11 is connected to one of the vane wheels 191. The vane wheels 191 are non-frictionally rotated in the body 192. Therefore, the Roots blower 19 does not use lubricating oils and the air that flows out of the Roots blower 19 is oil free. The outlet pipe 121 is connected to the air compressor 12 and has an inner end and two outer ends. The inner end of the outlet pipe 121 is connected to the outlet in the air compressor 12. The overpressure valve 126 is mounted on one of the outer ends of the outlet pipe 121. The constant-pressure valve 125 is mounted on the other outer end of the outlet pipe 121. The check valve 122 is mounted on the outlet pipe 121 between the constant-pressure valve 125 and the inner end of the outlet pipe 121. The water pump 123 has a shaft coaxially connected to the air compressor 12. The motor 124 has a shaft coaxially connected to the air compressor 12.

The back-up power supply 13 is electrically connected to the air compressor 12 to provide electric power to the air compressor 12 in a slight wind condition or a windless condition. Preferably, the back-up power supply 13 may be electricity direct output device and is coaxially connected to the motor 124 of the air compressor 12.

The air tank 14 is connected to the air compressor 12 to store the high pressure and high temperature air that produced by the air compressor 12 and has an air pipe 141. The air pipe 141 is connected to and communicates with the outlet pipe 121 of the air compressor 12 between the check valve 122 and the constant-pressure valve 125.

With further reference to Fig. 2, the temperature adjusting assembly 20 is electrically connected to the power assembly 10 and has a heat-eliminating device 21 and a heating device 22.

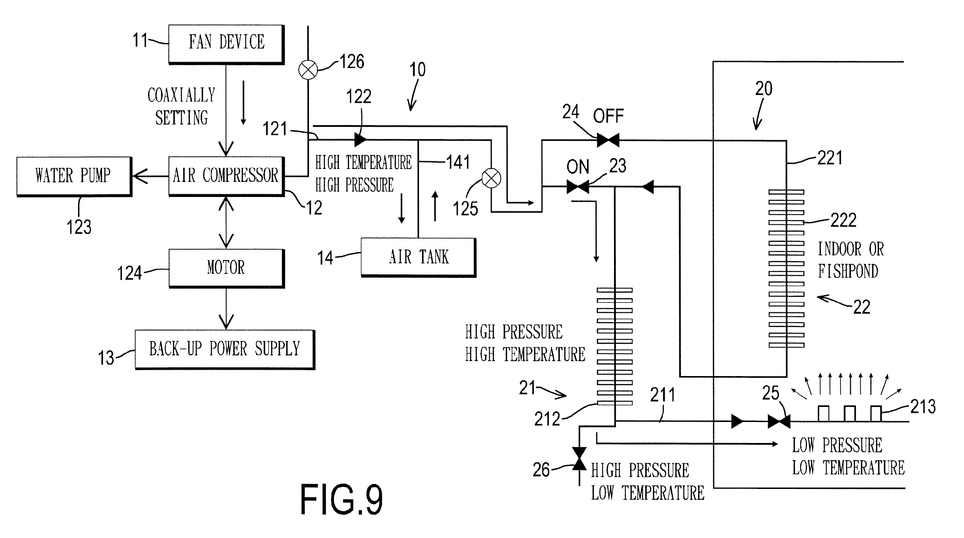

The heat-eliminating device 21 is connected to the air compressor 12 and has an inlet tube 211, multiple first tempering panels 212, at least one air-feeding hole 213, a first control valve 25 and a second control valve 26. The inlet tube 211 is connected to the outlet pipe 121 of the air compressor 12 and has a connecting end and a feeding end. The connecting end of the inlet tube 211 is connected to the outer end of the outlet pipe 121 on which the constant-pressure valve 125 mounted. With reference to Figs. 1 and 9, the feeding end of the inlet tube 211 can be set in a fishpond or an indoor of a building. The first tempering panels 212 are mounted on the inlet tube 211 at intervals between the connecting end and the feeding end of the inlet tube 211. The at least one air-feeding hole 213 is defined in the feeding end of the inlet tube 211. The first control valve 25 is mounted on the inlet tube 211 near the at least one air-feeding hole 213. The second control valve 26 is connected to the inlet tube 211 between the first tempering panels 212 and the first control valve 25.

The heating device 22 is connected to the heat-eliminating device 21 and has a linking tube 221, multiple second tempering panels 222, a third control valve 23 and a fourth control valve 24. The linking tube 221 is connected to the outlet pipe 121 of the air compressor 12 and has a connecting end 2211 and a linking end 2212. The connecting end 2211 of the linking tube 221 is connected to the outer end of the outlet pipe 121 on which the constant-pressure valve 125 mounted. The linking end 2212 of the linking tube 221 is connected to the inlet tube 211 near the first tempering panels 212. The second tempering panels 222 are mounted on the linking tube 221 at intervals between the connecting end 2211 and the linking end 2212 of the linking tube 221. The third control valve 23 is mounted on the linking tube 221 between the constant-pressure valve 125 and the first tempering panels 212. The fourth control valve 24 is mounted on the linking tube 221 near the connecting end 2211 of the linking tube 221.

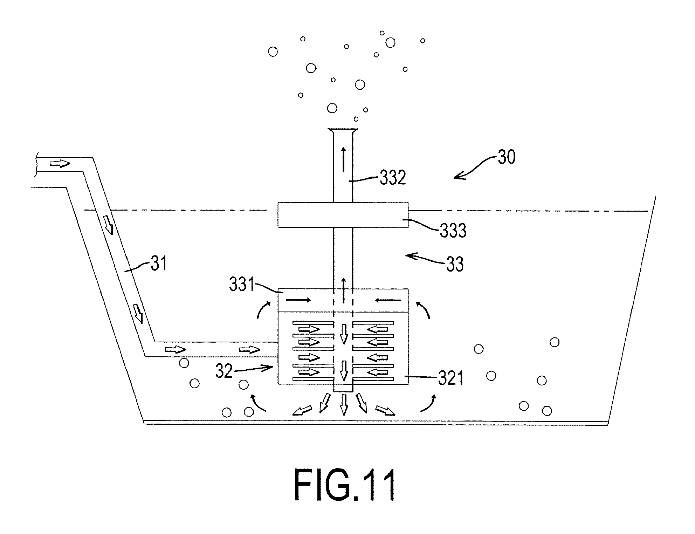

With reference to Figs. 1 and 11, the increasing assembly 30 is connected to the temperature adjusting assembly 20 and has an air-feeding pipe 31, an exiting device 32 and a spraying device 33. The air-feeding pipe 31 is connected to the inlet tube 211 of the heat-eliminating device 21 and has a feeding end. The exiting device 32 is connected to the feeding end of the air-feeding pipe 31 and has an air turbine 321. The air turbine 321 may be a Telsa turbine and is connected to the feeding end of the air-feeding pipe 31. The spraying device 33 is coaxially connected to the exiting device 32 and has a water-pumping turbine 331, a spraying pipe 332 and a floating board 333. The water-pumping turbine 331 is coaxially connected to the air turbine 321 and has an outfall. The spraying pipe 332 is connected to the outfall of the water-pumping turbine 331 and has an external surface. The floating board 333 is movably mounted around the external surface of the spraying pipe 332.

With reference to Fig. 9, when a user needs to lower the temperature of the indoor of a building or the fishpond, the third control valve 23 of the hear-eliminating device 21 is opened and the fourth control valve 24 of the heating device 22 is closed. When the air compressor 12 is working with the power provided by the fan device 11 or the back-up power supply 13, the high temperature?? and high pressure air will be transmitted to the first tempering panels 212 via the outlet pipe 121 of the air compressor 12 and the inlet tube 211 of the heat-eliminating device 21. With the heat-eliminating effect provided by the first tempering panels 212, the air in the inlet tube 211 will become to a high pressure and low temperature condition. When the high pressure and low temperature air flow into the indoor or the fishpond via the first control valve 25 and the at least one air-feeding hole 213, the temperature of the air will become lower due to the decompression of the air that is spread into the indoor or the fishpond and this can provide a cooling effect to the indoor or the fishpond.

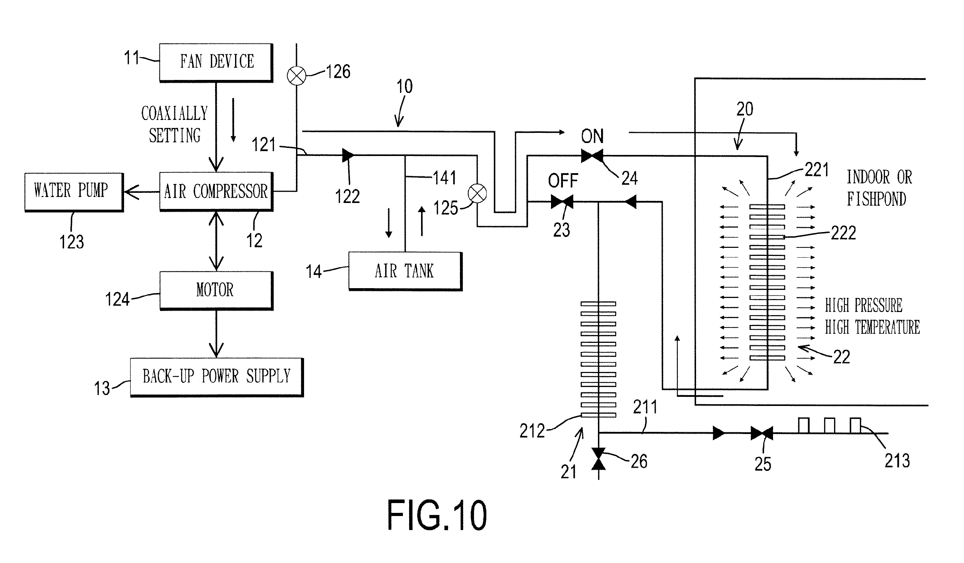

With reference to Fig. 10, when a user needs to raise the temperature of the indoor or the fishpond, the heating device 22 is mounted in the indoor or the fishpond and the fourth control valve 24 of the heating device 22 is opened and the third control valve 23 of the hear-eliminating device 21 is closed. When the air compressor 12 is working with the power provided by the fan device 11 or the back-up power supply 13, the high temperature and high pressure air will be transmitted to the second tempering panels 222 via the outlet pipe 121 of the air compressor 12 and the linking tube 221 of the heating device 22. With the heat-eliminating effect provided by the second tempering panels 222, the temperature of the indoor or the fishpond can be increased?? and this can provide a heating effect to the indoor or the fishpond. Furthermore, after the heat elimination of the second tempering panels 222, the first control valve 25 or the second control valve 26 is opened to release the air into the atmosphere.

With reference to Fig. 11, the high temperature and high pressure air that produced by the air compressor 12 can be transmitted to the air-feeding pipe 31 of the increasing assembly 30 via the inlet tube 211 of the heat-eliminating device 21 to drive the air turbine 321 working. A high pressure air column can be formed by the air turbine 321 and be ejected to the bottom of the fishpond, and this can increase the oxygen content in the fishpond and can turn the mud, the germs, the hazardous material or the marsh gas over the bottom of the fishpond. At the same time, the water-pumping turbine 331 is driven by the air turbine 321 to spray water columns into the atmosphere via the spraying pipe 332, and this can increase the oxygen content of the fishpond and also can disinfect the anaerobic germs and move the hazardous material or the marsh gas to the atmosphere.

In addition, with reference to Figs. 3 and 4, the air compressor 12 can be driven to produce the high temperature and high pressure air by the upright type fan device 15 or the horizontal type fan device 16. With further reference to Figs. 5, 6A, 6B and 7, the constructions between the outer casings 171, 181, 41 and the rotating tubes 172, 182, 42 of the vane type windmill 17, the centrifugal type windmill 18 and the modified type windmill 40 can pressurize and accelerate the air to promote the working efficiency of the air compressor 12.

The wind-powered energy saving system as described has the following advantages.
1. The air compressor 12 of the power assembly 10 of the wind-powered energy saving system in accordance with the present invention can be directly driven by the fan device 11 without using electric power and this can reduce the efficiency lost of the power exchange between the apparatus and achieve energy saving effect.
2. The temperature adjusting assembly 20 of the wind-powered energy saving system in accordance with the present invention can adjust the temperature of the indoor or the fishpond by the heat-eliminating device 21 and the heating device 22.
3. The high pressure air column can be formed by the air turbine 321 to eject to the bottom of the fishpond, and this can increase the oxygen content of the fishpond and can turn the mud, the germs, the hazardous material or the marsh gas over the bottom of the fishpond. At the same time, the water-pumping turbine 331 is driven by the air turbine 321 to allow the spraying pipe 332 spraying multiple water columns to the sky, and this can increase the oxygen content of the fishpond and also can disinfect the anaerobic germs and move the hazardous material or the marsh gas to the sky.
4. The increasing assembly 30 is worked by the high pressure air with using the electric water pumps, and this can prevent the electric power from leaking from the electric wires that are immersed in water of the fishpond to harm the personal safety. The use of the wind-powered energy saving system in accordance with the present invention is safe.
5. In the present invention, the constructions between the outer casings 171, 181, 41 and the rotating tubes 172, 182, 42 of the vane type windmill 17, the centrifugal type windmill 18 and the modified type windmill 40 can pressurize and accelerate the air to promote the working efficiency of the air compressor 12.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A wind-powered energy saving system, **characterized in that** the wind-powered energy saving system has
a power assembly (10) having
a fan device (11); and
an air compressor (12) connected to the fan device (11) and having an outlet pipe (121); and
a temperature adjusting assembly (20) electrically connected to the power assembly (10) and having
a heat-eliminating device (21) connected to the air compressor (12) and having
an inlet tube (211) connected to the outlet pipe (121) of the air compressor (12); and
multiple first tempering panels (212) mounted on the inlet tube (211) at intervals; and
a heating device (22) connected to the heat-eliminating device (21) and having
a linking tube (221) connected to the outlet pipe (121) of the air compressor (12); and
multiple second tempering panels (222) mounted on the linking tube (221) at intervals.

2. The wind-powered energy saving system as claimed in claim 1 further having an increasing assembly (30) connected to the temperature adjusting assembly (20) and having
an air-feeding pipe (31) connected to the inlet tube (211) of the heat-eliminating device (21) and having a feeding end;
an exiting device 32 connected to the feeding end of the air-feeding pipe (31) and having an air turbine (321) connected to the feeding end of the air-feeding pipe (31); and
a spraying device (33) coaxially connected to the exiting device 32 and having
a water-pumping turbine (331) coaxially connected to the air turbine (321) and having an outfall; and
a spraying pipe (332) connected to the outfall of the water-pumping turbine (331) and having an external surface.

3. The wind-powered energy saving system as claimed in claim 2, wherein the spraying device (33) has a floating board (333) movably mounted around the external surface of the spraying pipe (332).

4. The wind-powered energy saving system as claimed in claim 1 or 2 or 3, wherein the power assembly (10) has
a motor (124) connected to the air compressor (12);
a back-up power supply (13) electrically and connected to the motor (124) of the air compressor (12) to provide electric power to the air compressor (12) in a slight wind condition or a windless condition; and
an air tank (14) connected to the air compressor (12) to store the high pressure and high temperature air that produced by the air compressor (12) and having an air pipe (141) connected to and communicating with the outlet pipe (121) of the air compressor (12).

5. The wind-powered energy saving system as claimed in claim 4, wherein
the air compressor (12) has a water pump (123) connected to the air compressor (12);
the back-up power supply (13) is an electricity direct output device; and the heat-eliminating device (21) has at least one air-feeding hole (123) defined in the inlet tube (211).

6. The wind-powered energy saving system as claimed in claim 1 or 5, wherein the air compressor (12) has
a body (192) being hollow and having
an inlet; and
an outlet aligning with the inlet of the body (192); and
two vane wheels (191) rotatably mounted in the body (192) between the inlet and the outlet of the body (192).

7. The wind-powered energy saving system as claimed in claim 1 or 2 or 6,
wherein
the outlet pipe (121) has
an inner end connected to the air compressor (12); and
two outer ends;
the air compressor (12) has
an overpressure valve (126) mounted on one of the outer ends of the outlet pipe (121);
a constant-pressure valve (125) mounted on the other outer end of the outlet pipe (121); and
a check valve (122) mounted on the outlet pipe (121) between the constant-pressure valve (125) and the inner end of the outlet pipe (121); and
the air pipe (141) is connected to and communicates with the outlet pipe (121) of the air compressor (12) between the check valve (122) and the constant-pressure valve (125).

8. The wind-powered energy saving system as claimed in claim 2 or 7, wherein the inlet tube (211) has
a connecting end connected to the outer end of the outlet pipe (121) on which the constant-pressure valve (125) mounted; and
a feeding end;
the at least one air-feeding hole (213) is defined in the feeding end of the inlet tube (211);
the heat-eliminating device (21) has
a first control valve (25) mounted on the inlet tube (211) near the at least one air-feeding hole (213); and
a second control valve (26) mounted on the inlet tube (211) between the first tempering panels (212) and the first control valve (25);
the linking tube (221) has
a connecting end connected to the outer end of the outlet pipe (121) on which the constant-pressure valve (125) mounted; and
a linking end connected to the inlet tube (211) near the first tempering panels (212); and
the heating device (22) has
a third control valve (23) mounted on the linking tube (221) between the constant-pressure valve (125) and the first tempering panels (212); and
a fourth control valve (24) mounted on the linking tube (221) near the connecting end of the linking tube (221).

9. The wind-powered energy saving system as claimed in claim 8, wherein the fan device (11) is an upright type fan device (15).

10. The wind-powered energy saving system as claimed in claim 8, wherein the fan device (11) is a horizontal type fan device (16).

11. The wind-powered energy saving system as claimed in claim 1 or 8, wherein the fan device (11) is a jet-type fan device.

12. The wind-powered energy saving system as claimed in claim (11), wherein the jet-type fan device is a vane type windmill (17) and the vane type windmill (17) has
an outer casing (171) being hollow and having
an internal surface;
a front side;
a rear side;
multiple first stator plates (173) mounted on the internal surface of the outer casing (171) at intervals between the sides of the outer casing (171);
a holding mount (174) securely mounted on the rear side of the outer casing (171) and having
an outer surface; and
multiple second stator plates (175) mounted on the outer surface of the holding mount (174) at intervals;
an air channel (176) connected to the holding mount (174), communicating with the outer casing (171) and having an end extending out of the outer casing (171);
a filtrating net (178) mounted on the front side of the outer casing (171);
and
an impurity tank (179) connected to the end of the air channel (176) that extends out of the outer casing (171); and
a rotating tube (172) being hollow, rotatably mounted on the holding mount (174) around the second stator plates (175) and having
an internal surface;
an external surface; and
multiple active plates (177) mounted on the surfaces of the rotating tube (172) at intervals and respectively spaced with the stator plates (173, 175) of the outer casing (171).

13. The wind-powered energy saving system as claimed in claim (11), wherein the jet-type fan device is a centrifugal type windmill (18) and the centrifugal type windmill (18) has
an outer casing (181) being hollow and having
an internal surface;
a front side;
a rear side;
multiple first stator plates (183) mounted on the internal surface of the outer casing (181) at intervals between the sides of the outer casing (181);
a holding mount (184) securely mounted on the rear side of the outer casing (181) and having
an outer surface; and
multiple second stator plates (185) mounted on the outer surface of the holding mount (184) at intervals;
at least one spiral air channel (187) connected to the holding mount (184), communicating with the outer casing (181) and having an end extending out of the outer casing (181);
a filtrating net (188) mounted on the front side of the outer casing (181);
and
an impurity tank (189) connected to the end of the at least one spiral air channel (187) that extends out of the outer casing (181); and
a rotating tube (182) being hollow, rotatably mounted on the holding mount (184) around the second stator plates (185) and having
an internal surface;
an external surface; and
multiple active plates (186) mounted on the surfaces of the rotating tube (182) at intervals and respectively spaced with the stator plates (183, 185) of the outer casing (181).

14. The wind-powered energy saving system as claimed in claim (11), wherein the jet-type fan device is a modified type windmill (40) and the modified type windmill (40) has
an outer casing (41) being hollow and having
an internal surface;
a front side;
a rear side;
multiple stator plates (43) mounted on the internal surface of the outer casing (41) at intervals between the sides of the outer casing (41); and
an outer filtrating net (47) mounted on the front side of the outer casing (41);
a rotating tube (42) being convergent, rotatably mounted in the outer casing (41) and having
a front end rotatably connected to the front side of the outer casing (41);
a rear end;
an external surface;
multiple active plates (44) mounted on the external surface of the rotating tube (42) at intervals and respectively spaced with the stator plates (43) of the outer casing (41);
a direct blower (45) mounted around the rear end of the rotating tube (42) and having an air channel (46) connected to the direct blower (45), communicating with the rotating tube (42) and having an end extending out of the outer casing (41); and
an inner filtrating net (48) mounted in the front end of the rotating tube (42); and
an impurity tank (49) connected to the end of the air channel (46) that extends out of the outer casing (41).
